# EUROPÄISCHE PATENTANMELDUNG

(11) **EP 1 568 731 A1**
(43) Veröffentlichungstag der Anmeldung: **31.08.2005**
(21) Anmeldenummer: 05003218.4
(22) Anmeldetag: 16.02.2005
(51) Int. Cl.: C08K 5/5313, C08K 5/3445, C08K 5/3492, C08K 3/32

(54) **Flammschutzmittel-Kombination für thermoplastische Polymere**

(30) Priorität: 27.02.2004 DE 102004009455
(71) Anmelder: Clariant GmbH, 65929 Frankfurt am Main (DE)
(72) Erfinder: Steib, Christian, 86356 Steppach (DE); Hörold, Sebastian, Dr., 86420 Diedorf (DE)
(74) Vertreter: Mikulecky, Klaus

(57) **Zusammenfassung**

Die Erfindung betrifft eine neue Flammschutzmittel-Stabilisator-Kombination für thermoplastische Polymere, enthaltend als Komponente A 20 bis 80 Gew.-% eines Phosphinsäuresalzes der Formel (I) und/oder eines Diphosphinsäuresalzes der Formel (II) und/oder deren Polymere, 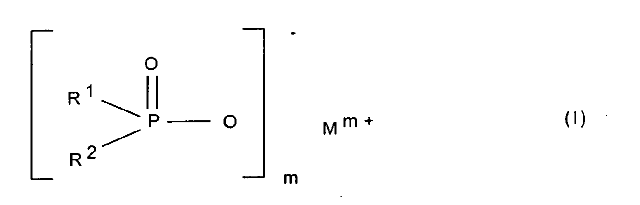 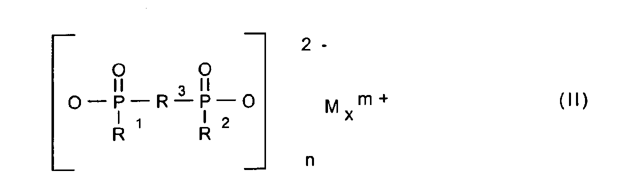 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4; n 1 bis 4; x 1 bis 4
bedeuten,
als Komponente B 10 bis 75 Gew.-% eines stickstoffhaltigen Synergisten und als Komponente C ein Phosphor/Stickstoff Flammschutzmittel in 10 bis 75 Gew.-%, wobei die Summe der Komponenten immer 100 Gew.-% beträgt.

## Beschreibung

Die Erfindung betrifft eine Flammschutzmittel-Kombination für thermoplastische Polymere, sowie polymere Formmassen, die solche Flammschutzmittel-Kombinationen enthalten.

Insbesondere für thermoplastische Polymere haben sich die Salze von Phosphinsäuren (Phosphinate) als wirksame flammhemmende Zusätze erwiesen (DE-A-22 52 258 und DE-A-24 47 727). Calcium- und Aluminiumphosphinate sind in Polyestern als besonders effektiv beschrieben worden und beeinträchtigen die Materialeigenschaften der Polymerformmassen weniger als z.B. die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (WO 97/39053 sowie DE-A-197 34 437 und DE-A-197 37 727).
Die DE-A-196 14 424 beschreibt Phosphinate in Verbindung mit Stickstoffsynergisten in Polyestern und Polyamiden. Unter anderem werden Melamin und Melaminverbindungen als wirksame Synergisten beschrieben, die selbst auch eine gewisse Wirkung in bestimmten Thermoplasten haben, in Kombination mit Phosphinaten aber deutlich wirksamer sind.

Die DE-A-199 33 901 beschreibt Phosphinate in Kombination mit Umsetzungsprodukten von Melamin und Phosphorsäure, beispielsweise Melaminpolyphosphat, als Flammschutzmittel für Polyester und Polyamide.

Die Wirkung der Phosphinate und der Stickstoffsynergisten bzw. der Melamin-Phosphorsäure-Umsetzungsprodukte wird im Wesentlichen für Brandprüfungen nach UL 94 Vertikaltest beschrieben. Die Wirkung der Kombinationen ist in einzelnen Thermoplasten aber noch nicht zufrieden stellend. Zudem ist die Wirkung im Glühdrahttest nach IEC noch unzureichend. Durch die für den UL 94 Test notwendigen Dosierungen kommt es auch zu Polymerabbau und Verfärbungen der flammwidrig ausgerüsteten Kunststoffe, dem bisher noch nicht wirkungsvoll begegnet werden kann.

Aufgrund Ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen. Effekte, die bei der Kunststoffverarbeitung ohne Flammschutzmittel eventuell gar nicht oder nur in abgeschwächter Form auftreten.

Die Verarbeitung von thermoplastischen Kunststoffen erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein. Im Allgemeinen werden Stabilisatoren zugegeben, die die Veränderungsprozesse wie Vernetzungs- oder Abbaureaktionen unterbinden oder zumindest bremsen. Weiterhin werden den meisten Kunststoffen Gleitmittel beigemengt, die primär die Aufgabe haben, das Fließverhalten der Schmelze zu verbessern.

In der Regel wird eine Vielzahl unterschiedlicher Additive gleichzeitig verwendet, von denen jedes für sich eine Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität des Kunststoffs bei der Verarbeitung in der Schmelze beeinflusst werden.

Ohne den Zusatz von Flammschutzmitteln werden Polyamide im Allgemeinen durch kleine Mengen von Kupferhalogeniden sowie aromatische Amine und sterisch gehinderten Phenole stabilisiert, wobei die Erzielung einer langfristigen Stabilität bei hohen Dauergebrauchstemperaturen im Vordergrund steht (H. Zweifel (Ed.):
"Plastics Additives Handbook", 5^{th} Edition, Carl Hanser Verlag, München, 2000, Seiten 80 bis 84). Auch Polyester benötigen eine antioxidative Stabilisierung im Wesentlichen für den Dauergebrauch, nicht für den Verarbeitungsprozess.

Es war daher Aufgabe der vorliegenden Erfindung, Flammschutzmittel-Kombinationen für Polyamide oder Polyester zur Verfügung zu stellen, die neben der Erfüllung verschiedener, im Elektro- und Elektronikbereich geforderten Brandnormen auch eine stabilisierende Wirkung auf den Kunststoff ausüben. Gelöst wird diese Aufgabe durch die Verwendung von Phosphinaten mit stickstoffhaltigen Synergisten und Phosphor-Stickstoff-Flammschutzmitteln, sowie gegebenenfalls dem Zusatz von Zinkverbindungen und weiteren Additiven sowie Füll- und Verstärkungsstoffen.

Gegenstand der Erfindung ist daher eine Flammschutzmittel-Kombination für thermoplastische Polymere, enthaltend als Komponente A
20 bis 80 Gew.-% eines Phosphinsäuresalzes der Formel (I) und/oder eines Diphosphinsäuresalzes der Formel (II) und/oder deren Polymere, 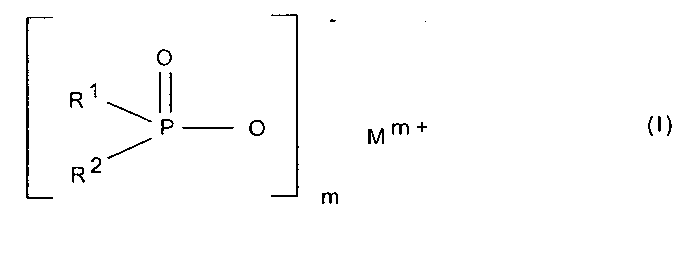 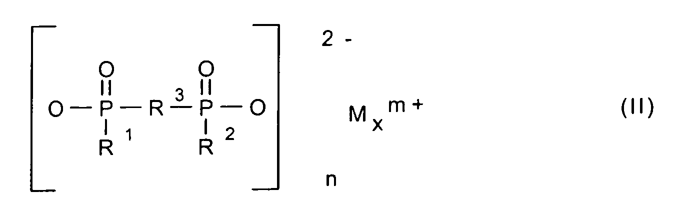 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten,
als Komponente B 10 bis 75 Gew.-% eines stickstoffhaltigen Synergisten und als Komponente C ein Phosphor/Stickstoff Flammschutzmittel in 10 bis 75 Gew.-%, wobei die Summe der Komponenten immer 100 Gew.-% beträgt.

Überraschenderweise wurde gefunden, dass erfindungsgemäße Kombinationen von Phosphinaten und Phosphor-Stickstoff-Flammschutzmitteln, wie beispielsweise Melaminpolyphosphat, eine deutlich verbesserte Glühdrahtbeständigkeit aufweisen, wenn bestimmte Stickstoffsynergisten wie beispielsweise Melamincyanurat zugegeben werden. Die Stabilität bei der Verarbeitung kann durch den Zusatz von Zinkverbindungen wie Zinkborat, Zinkoxid oder Zinkstearat deutlich verbessert werden.

Zur Verbesserung der Verarbeitungsstabilität können auch bestimmte Oxide, Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe zugesetzt werden. Es können beispielsweise Magnesiumoxid, Calciumoxid, Aluminiumoxid, Manganoxid, Zinnoxid, Aluminiumhydroxid, Böhmit, Dihydrotalcit, Hydrocalumit, Magnesiumhydroxid, Calciumhydroxid, Calciumcarbonat, Zinkhydroxid, Zinnoxidhydrat oder Manganhydroxid verwendet werden.

Die erfindungsgemäßen Kombinationen von Flammschutzmitteln und Zinkverbindungen reduzieren die Verfärbung der Kunststoffe bei der Verarbeitung in der Schmelze und unterdrücken den Abbau der Kunststoffe zu Einheiten mit geringerem Molekulargewicht. Gleichzeitig bleibt die Flammwidrigkeit in vollem Umfang erhalten.

Überraschenderweise wurde auch gefunden, dass durch die erfindungsgemäßen Zusätze von Zinkverbindungen eine Rauchentwicklung bei Extrusion und Spritzguss vollständig verschwindet.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Geeignete Phosphinate sind in der WO97/39053 beschrieben, auf die ausdrücklich Bezug genommen wird.

Besonders bevorzugte Phosphinate sind Aluminium-, Calcium- und Zinkphosphinate.

Bevorzugt handelt es sich bei den stickstoffhaltigen Synergisten (Komponente B) um solche der Formeln (III) bis (VIII) oder Gemische davon 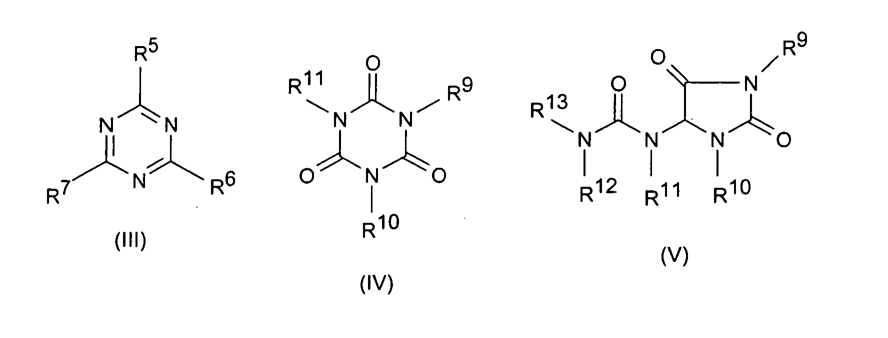 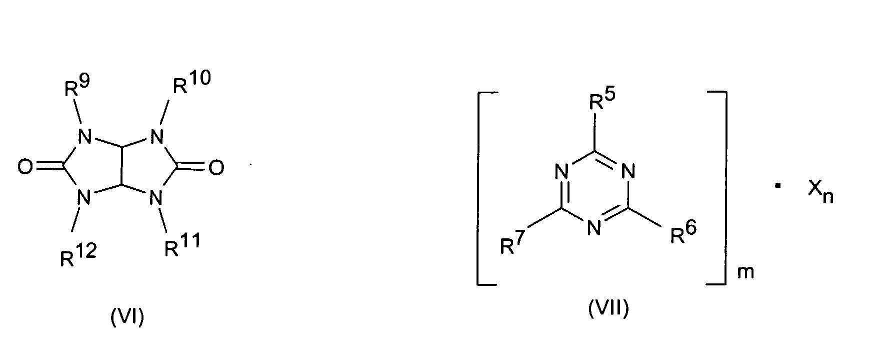 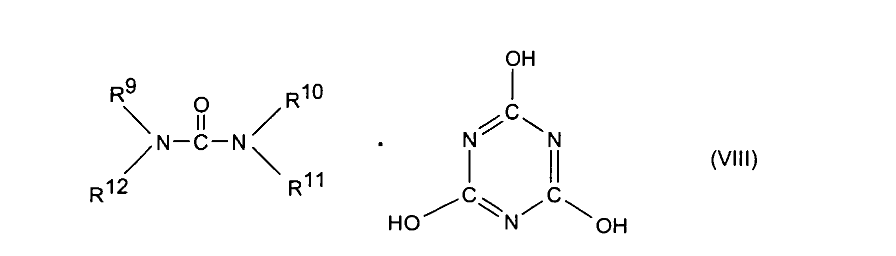 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten;
oder um oligomere Ester des Tris(hydroxyethyl)isocyanurats mit aromatischen Polycarbonsäuren

Bevorzugt handelt es sich bei den stickstoffhaltigen Synergisten um Benzoguanamin, Tris(hydroxyethyl)isocyanurat, Allantoin, Glycouril, Melamin, Melamincyanurat, Harnstoffcyanurat, Dicyandiamid, Guanidin.

Bevorzugt handelt es sich bei den Stickstoffsynergisten um Kondensationsprodukte des Melamins. Kondensationsprodukte des Melamins sind z.B. Melem, Melam oder Melon bzw. höher kondensierte Verbindungen dieses Typs sowie Gemische derselben und können z.B. durch ein Verfahren hergestellt werden, wie es in WO-A-96/16948 beschrieben ist.

Bevorzugt handelt es sich bei den Phosphor/Stickstoff Flammschutzmitteln (Komponente C) um Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische der genannten Produkte.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z.B. in der WO 98/39306 beschrieben sind.

Besonders bevorzugt handelt es sich bei der Komponente C um Melaminpolyphosphat.

Bevorzugt handelt es sich bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt handelt es sich bei der Komponente C um Ammoniumhydrogenphosphat, Ammoniumdihydrogenphosphat oder Ammoniumpolyphosphat.

Bevorzugt besteht die Komponente C aus mindestens zwei unterschiedlichen Phosphor/Stickstoff Flammschutzmitteln.

Bevorzugt enthält die Flammschutzmittel-Stabilisator-Kombination weiterhin Carbodiimide.

Bevorzugt enthält die Flammschutzmittel-Stabilisator-Kombination zusätzlich als Komponente D eine organische oder anorganische Zinkverbindung oder Mischungen verschiedener Zinkverbindungen in 0,1 bis 10 Gew.-%, wobei die Summe aller Komponenten immer 100 Gew.-% beträgt.

Bevorzugt handelt es sich bei der Komponente D Zinkoxid, Zinkborat und/oder Zinkstannat.

Bevorzugt enthält die Flammschutzmittel-Stabilisator-Kombination 50 bis 80 Gew.-% der Komponente A, 10 bis 75 Gew.-% der Komponente B und 10 bis 75 Gew.-% der Komponente C.

Besonders bevorzugt enthält die Flammschutzmittel-Stabilisator-Kombination 50 bis 80 Gew.-% der Komponente A, 10 bis 40 Gew.-% der Komponente B und 10 bis 40 Gew.-% der Komponente C.

Bevorzugt enthält die Flammschutzmittel-Stabilisator-Kombination 50 bis 80 Gew.-% der Komponente A, 10 bis 75 Gew.-% der Komponente B und 10 bis 75 Gew.-% der Komponente C und 0,1 bis 10 Gew.-% der Komponente D.

Besonders bevorzugt enthält die Flammschutzmittel-Stabilisator-Kombination 50 bis 80 Gew.-% der Komponente A, 10 bis 40 Gew.-% der Komponente B und 10 bis 40 Gew.-% der Komponente C und 0,1 bis 7 Gew.-% der Komponente D.

Die Mengenverhältnisse der Komponenten A, B, C und ggf. D in der Flammschutzmittel-Kombination hängen wesentlich vom vorgesehenen Anwendungsgebiet ab und können in weiten Grenzen variieren.

Die Erfindung betrifft auch eine flammfest ausgerüstete Kunststoff-Formmasse, enthaltend die erfindungsgemäße Flammschutzmittel-Stabilisator-Kombination.

Bevorzugt handelt es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol) oder PPE/HIPS (Polyphenylenether/Polystyrol-HI) Kunststoffe.

Besonders bevorzugt handelt es sich bei dem Kunststoff um Polyamide, Polyester und PPE/HIPS-Blends.

Bevorzugt wird die Flammschutzmittel-Stabilisator-Kombination in der Kunststoff-Formmasse in einer Gesamtmenge von 2 bis 50 Gew.-%, bezogen auf die Kunststoff-Formmasse, eingesetzt.

Besonders bevorzugt wird die Flammschutzmittel-Stabilisator-Kombination in der Kunststoff-Formmasse in einer Gesamtmenge von 10 bis 30 Gew.-%, bezogen auf die Kunststoff-Formmasse, eingesetzt.

Die Erfindung betrifft schließlich auch Polymer-Formkörper, -Filme, -Fäden und -Fasern enthaltend die erfindungsgemäße Flammschutzmittel-Stabilisator-Kombination.

Die Polymer-Formkörper, -Filme, -Fäden und -Fasern sind dadurch gekennzeichnet, dass es sich um Polystyrol-HI (High-Impact), Polyphenylenether, Polyamide, Polyester, Polycarbonate und Blends oder Polymerblends vom Typ ABS (AcrylnitrilButadien-Styrol) oder PC/ABS (Polycarbonat/Acrylnitril-Butadien-Styrol), Polyamid, Polyester und/oder ABS handelt.

Bevorzugt enthalten die Polymer-Formkörper, -Filme, -Fäden und -Fasern die Flammschutzmittel-Kombination in einer Gesamt-Menge von 2 bis 50 Gew.-%, bezogen auf den Polymergehalt.

Besonders bevorzugt enthalten die Polymer-Formkörper, -Filme, -Fäden und -Fasern die Flammschutzmittel-Stabilisator-Kombination in einer Gesamt-Menge von 10 bis 30 Gew.-%, bezogen auf den Polymergehalt.

In einer besondern Ausführungsform enthalten die Polymer-Formkörper, -Filme, -Fäden und -Fasern 2 bis 30 Gew.-% der Flammschutzmittel-Stabilisator-Kombination, bestehend aus 50 bis 80 Gew.-% der Komponente A, aus 10 bis 40 Gew.-% der Komponente B, aus 10 bis 40 Gew.-% der Komponente C und aus 0 bis 10 Gew.-% der Komponente D, bezogen auf den Polymergehalt.

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Bevorzugt wird die Mischung in einer Formmasse eines Polyamides oder eines Polyesters verwendet. Geeignete Polyamide sind z.B. in der DE-A-199 20 276 beschrieben.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6, Polyamid 12, teilaromatische Polyamide und/oder Polyamid 66.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

Zusätzlich können Carbodiimide oder chain extender, z.B. vom Bisoxazolin-Typ der Epoxyverbindungen enthalten sein.

Gegebenenfalls können dem Polymeren weitere Additive zugesetzt werden. Als Additive können Wachse, Lichtschutzmittel, Stabilisatoren, Antioxidantien, Antistatika oder Mischungen derartiger Additive zugesetzt werden.

Als bevorzugte Stabilisatoren können Phosphonite und Phosphite oder Carbodiimide verwendet werden.

Vorgenannte Zusatzstoffe können auch der Flammschutzmittel-Stabilisator-Kombination zugesetzt werden.

### Beispiele

### 1. Eingesetzte Komponenten

Handelsübliche Polymere (Granulate):
Polyamid 6.6 (PA 6.6-GV): ®Durethan AKV 30 (Fa. Bayer AG, D) enthält 30 % Glasfasern.
Flammschutzmittelkomponenten (pulverförmig):
   Komponente A:
      Aluminiumsalz der Diethylphosphinsäure, im Folgenden als DEPAL bezeichnet.
   Komponente B:
      Melapur MC 50 (Melamincyanurat), folgenden als MC bezeichnet, Fa. Ciba Melapur, NL
      Harnstoffcyanurat, im Folgenden als HC bezeichnet, Agrolinz, Linz, Österreich
   Komponente C:
      Melapur 200 (Melaminpolyphosphat), im Folgenden als MPP bezeichnet, Fa. Ciba Melapur, NL
      Melapur MP (Melaminpyrophosphat), im Folgenden als MP bezeichnet, Fa. Ciba Melapur, NL
   Komponente D:
      Zinkborat, im Folgenden als ZB bezeichnet, Borax, USA
      Zinkstearat Liga 101, im Folgenden als ZSt bezeichnet, Peter Greven Fettchemie, D

### 2. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat und ggf. dem Stabilisatoren vermischt und auf einem Doppelschneckenextruder (Typ Leistritz LSM 30/34) bei Temperaturen von 260 bis 310°C (PA 6.6-GV) bzw. von 240 bis 280°C (PBT-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 270 bis 320°C zu Prüfkörpern verarbeitet und anhand des UL 94-Tests (Underwriter Laboratories) auf Flammwidrigkeit geprüft und klassifiziert. Die Glühdrahtbeständigkeit wurde nach IEC 60695 bestimmt.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Tabelle 1 zeigt Vergleichsbeispiele, in denen eine Flammschutzmittel-Kombination, basierend auf dem Aluminiumsalz der Diethylphosphinsäure (DEPAL) und dem stickstoffhaltigen Synergisten Melamincyanurat bzw. Harnstoffcyanurat und den Phosphor-Stickstoff-Flammschutzmitteln Melaminpolyphosphat (MPP) bzw. Melaminpyrophosphat (MP) allein bzw. in Zweierkombinationen verwendet werden.

Die Ergebnisse der Beispiele, in denen die Flammschutzmittel-Mischung gemäß der Erfindung eingesetzt wurden, sind in den Tabellen 2 und 3 aufgelistet. Alle Mengen sind als Gew.-% angegeben und beziehen sich auf die Kunststoff-Formmasse einschließlich der Flammschutzmittel-Kombination und Zusatzstoffen.

Aus den Vergleichsbeispielen wird ersichtlich, dass durch Kombination von Depal mit Stickstoffsynergist bzw. Kombination von Depal mit Phosphor-Stickstoff-Flammschutzmittel nur ein GWIT von 700°C erreicht wird. Für unbeaufsichtigte Haushaltsgeräte und elektrischen Strömen größer 0,2A wird aber GWIT 775°C gefordert. Die Brandklasse UL 94 V-0 wird dagegen erreicht.

Aus den Beispielen geht hervor, dass die erfindungsgemäßen Zusätze (Mischung aus den Komponenten Phosphinat, Stickstoffsynergist und Phosphor-Stickstoff-Flammschutzmittel die Glühdrahtbeständigkeit der Polyamide erhöhen. Nur mit den Kombinationen aus drei Stoffen kann ein GWIT von 775°C erreicht werden bei insgesamt konstanter Dosierung der Flammschutzmittel.

Die Einarbeitung der Flammschutzmittel in PA 6.6 führt zu einem Polymerabbau, erkennbar an hohen MVR-Werten, und zu einer Graubraun-Verfärbung der Formmassen, erkennbar an hohem Yellowness Index.

Wird nun eine erfindungsgemäße Flammschutzmittel-Stabilisator-Kombination aus Phosphinat, Stickstoffsynergist, Phosphor-Stickstoff-Flammschutzmittel und Zlnkverbindung (B8, B9, B10), kann eine deutliche Stabilisierung der flammgeschützten Polyamidschmelze und eine wesentlich verminderte Verfärbung der Prüfkörper, erkennbar an geringeren MVR und Yellowness-Index Werten, festgestellt werden.

**Tabelle 1:**

| Vergleichsbeispiele (Versuchsreihe 1): Flammschutz-Formmassen mit den Komponenten als einzelne Additive in glasfaserverstärktem PA 6.6. | | | | | | | |
|---|---|---|---|---|---|---|---|
| Vergleich | DEPAL [%] | MPP [%] | MP [%] | MC [%] | HC [%] | Klasse nach UL 94 (0,8 mm) | GWIT / IEC 60695-2-13 [°C] |
| V1 | 0 | 0 | 0 | 0 | 0 | n.k.^{**)} | 550 |
| V2 | 30 | 0 | 0 | 0 | 0 | V-0 | 700 |
| V3 | 0 | 30 | 0 | 0 | 0 | V-0. | 700 |
| V4 | 0 | 0 | 30 | 0 | 0 | V-0 | 700 |
| V5 | 0 | 0 | 0 | 30 | 0 | V-2 | 700 |
| V6 | 0 | 0 | 0 | 0 | 30 | V-2 | 700 |
| V7 | 15 | 15 | 0 | 0 | 0 | V-0 | 700 |
| V8 | 0 | 15 | 0 | 0 | 15 | V-2 | 700 |
| V9 | 15 | 0 | 0 | 0 | 15 | V-0 | 700 |

| | | | | | | | |
|---|---|---|---|---|---|---|---|
| ^{*)} von Prüfkörper, Massetemperatur beim Spritzgießen: 300°C ^{**)} n.k. = nicht klassifizierbar | | | | | | | |

**Tabelle 2:**

| Erfindungsgemäße Beispiele: Flammschutz-Formmassen mit der Kombination von DEPAL mit Stickstoffsynergist und Phosphor-Stickstoff-Flammschutzmittel in glasfaserverstärktem PA 6.6. | | | | | | | |
|---|---|---|---|---|---|---|---|
| Vergleich | DEPAL [%] | MPP [%] | MP [%] | MC [%] | HC [%] | Klasse nach UL 94 (0,8 mm) | GWIT / IEC 60695-2-13 [°C] |
| B1 | 10 | 10 | 0 | 10 | 0 | V-0 | 775 |
| B2 | 10 | 0 | 10 | 10 | 0 | V-0 | 775 |
| B3 | 10 | 10 | 0 | 0 | 10 | V-0 | 775 |
| B4 | 10 | 5 | 0 | 15 | 0 | V-0 | 775 |
| B5 | 10 | 5 | 0 | 5 | 0 | V-0 | 775 |
| B6 | 10 | 0 | 5 | 0 | 10 | V-0 | 775 |

**Tabelle 3:**

| Erfindungsgemäße Beispiele: Flammschutz-Formmassen mit der Kombination von DEPAL mit Stickstoffsynergist und Phosphor-Stickstoff-Flammschutzmittel und Zinkverbindung in glasfaserverstärktem PA 6.6. | | | | | | | |
|---|---|---|---|---|---|---|---|
| Vergleich | DEPAL [%] | MPP [%] | MC [%] | ZB [%] | ZSt [%] | MVR 275°C/2,16 kg | Yellowness Index |
| B7 | 10 | 10 | 10 | 0 | 0 | 19 | 25 |
| B8 | 10 | 10 | 10 | 2 | 0 | 12 | 13 |
| B9 | 10 | 10 | 10 | 0 | 2 | 13 | 11 |
| B1 | 10 | 10 | 10 | 1 | 1 | 12 | 11 |

## Patentansprüche

1. Flammschutzmittel-Stabilisator-Kombination für thermoplastische Polymere, enthaltend als Komponente A 20 bis 80 Gew.-% eines Phosphinsäuresalzes der Formel (I) und/oder eines Diphosphinsäuresalzes der Formel (II) und/oder deren Polymere, 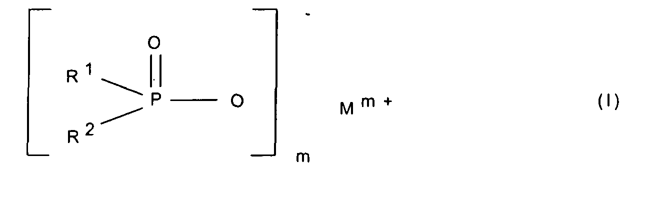 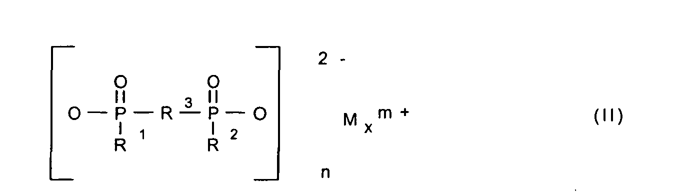 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten,
als Komponente B 10 bis 75 Gew.-% eines stickstoffhaltigen Synergisten und als Komponente C ein Phosphor/Stickstoff Flammschutzmittel in 10 bis 75 Gew.-%,
wobei die Summe der Komponenten immer 100 Gew.-% beträgt.

2. Flammschutzmittel-Stabilisator-Kombination nach Anspruch 1, **dadurch gekennzeichnet, dass** R¹, R² gleich oder verschieden sind und C₁-C₆-Alkyl, linear oder verzweigt und/oder Phenyl bedeuten.

3. Flammschutzmittel-Stabilisator-Kombination nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammschutzmittel-Stabilisator-Kombination nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

5. Flammschutzmittel-Stabilisator-Kombination nach einem oder mehreren der Ansprüche 1 bis 4, **dadurch gekennzeichnet, dass** M Calcium-, Aluminium- oder Zinklonen bedeutet.

6. Flammschutzmittel-Stabilisator-Kombination nach einem oder mehreren der Ansprüche 1 bis 5, **dadurch gekennzeichnet, dass** es sich bei der Komponente B um eine Stickstoffverbindung der Formeln (III) bis (VIII) oder Gemische davon handelt, 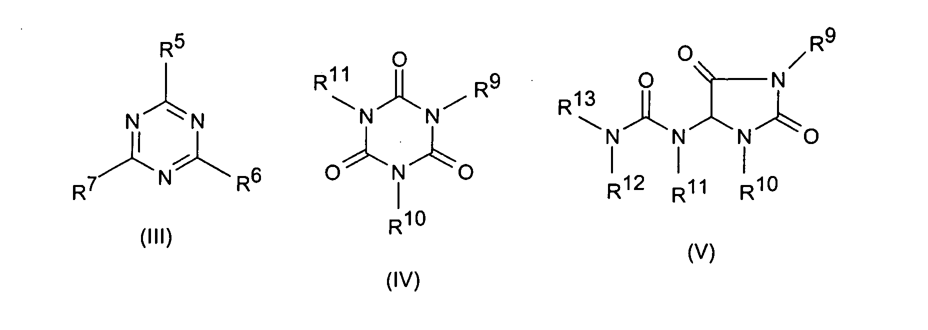 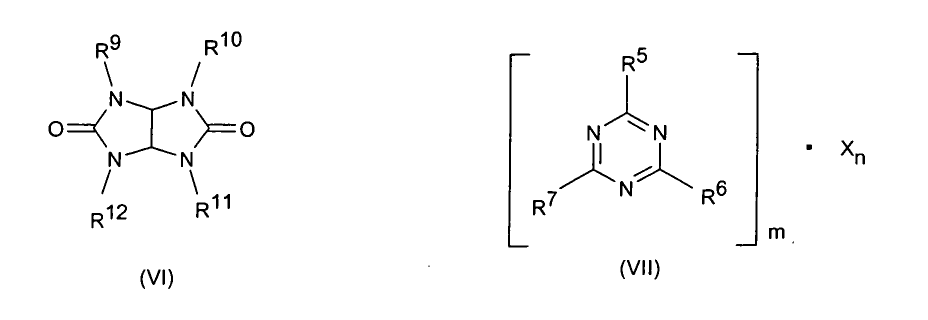 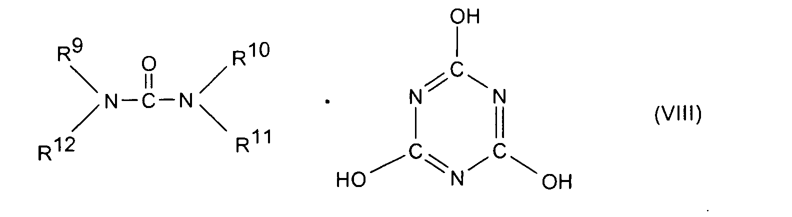 worin
R⁵ bis R ⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸, m und n unabhängig voneinander 1, 2, 3 oder 4 und X Säuren, die Addukte mit Triazinverbindungen (III) bilden können, bedeuten;
oder um oligomere Ester des Tris(hydroxyethyl)isocyanurats mit aromatischen Polycarbonsäuren.

7. Flammschutzmittel-Stabilisator-Kombination nach einem oder mehreren der Ansprüche 1 bis 6, **dadurch gekennzeichnet, dass** es sich bei der Komponente B um Benzoguanamin, Tris(hydroxyethyl)isocyanurat, Allantoin, Glycouril, Melamin, Melamincyanurat, Harnstoffcyanurat, Dicyandiamid und/oder Guanidin handelt.

8. Flammschutzmittel-Stabilisator-Kombination nach einem oder mehreren der Ansprüche 1 bis 7, **dadurch gekennzeichnet, dass** es sich bei der Komponente B um Kondensationsprodukte des Melamins handelt.

9. Flammschutzmittel-Stabilisator-Kombination nach einem oder mehreren der Ansprüche 1 bis 8, **dadurch gekennzeichnet, dass** es sich bei den Kondensationsprodukten des Melamins um Melem, Melam, Melon und/oder höherkondensierte Verbindungen davon handelt.

10. Flammschutzmittel-Stabilisator-Kombination nach einem oder mehreren der Ansprüche 1 bis 9, **dadurch gekennzeichnet, dass** es sich bei der Komponente C um Umsetzungsprodukte von Melamin mit Polyphosphorsäure und/oder um Umsetzungsprodukte von Kondensationsprodukten des Melamins mit Polyphosphorsäure oder Gemische davon handelt.

11. Flammschutzmittel-Stabilisator-Kombination nach einem oder mehreren der Ansprüche 1 bis 10, **dadurch gekennzeichnet, dass** es sich bei den Umsetzungsprodukten um Dimelaminpyrophosphat, Melaminpolyphosphat, Melempolyphosphat, Melampolyphosphat, Melonpolyphosphat und/oder gemischte Polysalze dieses Typs handelt.

12. Flammschutzmittel-Stabilisator-Kombination nach Anspruch 11, **dadurch gekennzeichnet, dass** es sich bei der Komponente C um Melaminpolyphosphat handelt.

13. Flammschutzmittel-Stabilisator-Kombination nach einem oder mehreren der Ansprüche 1 bis 12, **dadurch gekennzeichnet, dass** es bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

14. Flammschutzmittel-Stabilisator-Kombination nach Anspruch 13 **dadurch gekennzeichnet, dass** es sich bei der Komponente C um Ammoniumhydrogenphosphat, Ammoniumdihydrogenphosphat und/oder Ammoniumpolyphosphat handelt.

15. Flammschutzmittel-Stabilisator-Kombination nach einem oder mehreren der Ansprüche 1 bis 14, **dadurch gekennzeichnet, dass** die Komponente C aus mindestens zwei unterschiedlichen Phosphor/Stickstoff Flammschutzmitteln besteht.

16. Flammschutzmittel-Stabilisator-Kombination nach einem oder mehreren der Ansprüche 1 bis 15, **dadurch gekennzeichnet, dass** sie weiterhin Carbodiimide enthalten.

17. Flammschutzmittel-Stabilisator-Kombination nach einem oder mehreren der Ansprüche 1 bis 16, **dadurch gekennzeichnet, dass** sie zusätzlich als Komponente D eine organische oder anorganische Zinkverbindung oder Mischungen verschiedener Zinkverbindungen in 0,1 bis 10 Gew.-%, wobei die Summe aller Komponenten immer 100 Gew.-% beträgt, enthält.

18. Flammschutzmittel-Stabilisator-Kombination nach einem oder mehreren der Ansprüche 1 bis 17, **dadurch gekennzeichnet, dass** es sich bei der Komponente D Zinkoxid, Zinkborat und/oder Zinkstannat handelt.

19. Flammschutzmittel-Stabilisator-Kombination nach einem oder mehreren der Ansprüche 1 bis 18, **dadurch gekennzeichnet, dass** 50 bis 80 Gew.-% der Komponente A, 10 bis 75 Gew.-% der Komponente B und 10 bis 75 Gew.-% der Komponente C enthalten sind.

20. Flammschutzmittel-Stabilisator-Kombination nach einem oder mehreren der Ansprüche 1 bis 19, **dadurch gekennzeichnet, dass** 50 bis 80 Gew.-% der Komponente A, 10 bis 40 Gew.-% der Komponente B und 10 bis 40 Gew.-% der Komponente C enthalten sind.

21. Flammschutzmittel-Stabilisator-Kombination nach einem oder mehreren der Ansprüche 1 bis 20, **dadurch gekennzeichnet, dass** 50 bis 80 Gew.-% der Komponente A, 10 bis 75 Gew.-% der Komponente B und 10 bis 75 Gew.-% der Komponente C und 0,1 bis 10 Gew.-% der Komponente D enthalten sind.

22. Flammschutzmittel-Stabilisator-Kombination nach einem oder mehreren der Ansprüche 1 bis 21, **dadurch gekennzeichnet, dass** 50 bis 80 Gew.-% der Komponente A, 10 bis 40 Gew.-% der Komponente B und 10 bis 40 Gew.-% der Komponente C und 0,1 bis 7 Gew.-% der Komponente D enthalten sind.

23. Flammfest ausgerüstete Kunststoff-Formmasse, enthaltend eine Flammschutzmittel-Stabilisator-Kombination gemäß einem oder mehreren der Ansprüche 1 bis 22.

24. Flammfest ausgerüstete Kunststoff-Formmasse gemäß Anspruch 23, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

25. Flammfest ausgerüstete Kunststoff-Formmasse gemäß Anspruch 23 oder 24, **dadurch gekennzeichnet, dass** es sich bei dem Kunststoff um Polyamide, Polyester und PPE/HIPS-Blends handelt.

26. Flammfest ausgerüstete Kunststoff-Formmasse gemäß einem oder mehreren der Ansprüche 23 bis 25, **dadurch gekennzeichnet, dass** sie die Flammschutzmittel-Stabilisator-Kombination in einer Menge von 2 bis 50 Gew.-%, bezogen auf die Kunststoff-Formmasse, enthält.

27. Flammfest ausgerüstete Kunststoff-Formmasse gemäß einem oder mehreren der Ansprüche 23 bis 26, **dadurch gekennzeichnet, dass** sie die Flammschutzmittel-Stabilisator-Kombination in einer Menge von 10 bis 30 Gew.-%, bezogen auf die Kunststoff-Formmasse, enthält.

28. Polymer-Formkörper, -Filme, -Fäden und -Fasern enthaltend eine Flammschutzmittel-Stabilisator-Kombination gemäß einem oder mehreren der Ansprüche 1 bis 22.

29. Polymer-Formkörper, -Filme, -Fäden und -Fasern nach Anspruch 28, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

30. Polymer-Formkörper, -Filme, -Fäden und -Fasern nach Anspruch 28 oder 29, **dadurch gekennzeichnet, dass** sie die Flammschutzmittel-Stabilisator-Kombination in einer Menge von 2 bis 50 Gew.-%, bezogen auf den Polymergehalt, enthalten.

31. Polymer-Formkörper, -Filme, -Fäden und -Fasern nach einem oder mehreren der Ansprüche 28 bis 30, **dadurch gekennzeichnet, dass** sie die Flammschutzmittel-Stabilisator-Kombination in einer Menge von 10 bis 30 Gew.-%, bezogen auf den Polymergehalt, enthalten.
